(19) Europäisches Patentamt
European Patent Office
Office européen des brevets

(11) EP 4 312 069 A2

(12) EUROPEAN PATENT APPLICATION

(43) Date of publication:
**31.01.2024 Bulletin 2024/05**

(21) Application number: **23174944.1**

(22) Date of filing: **23.05.2023**

(51) International Patent Classification (IPC):
***G02B 6/32*** (2006.01) ***G02B 27/30*** (2006.01)
*H04B 10/112* (2013.01) *G02B 6/42* (2006.01)

(52) Cooperative Patent Classification (CPC):
**G02B 6/32; G02B 27/30;** G02B 6/4285;
H04B 10/1121; H04B 10/1125

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.06.2022 US 202263349750 P**
**12.05.2023 US 202318196519**

(71) Applicant: **Panduit Corp.**
**Tinley Park, IL 60487 (US)**

(72) Inventors:
- **Pimpinella, Richard J.**
  **Prairieville (US)**
- **Castro, Jose M.**
  **Naperville (US)**
- **Huang, Yu**
  **Orland Park (US)**
- **Kose, Bulent**
  **Burr Ridge (US)**

(74) Representative: **Roberts, Gwilym Vaughan et al**
**Kilburn & Strode LLP**
**Lacon London**
**84 Theobalds Road**
**London WC1X 8NL (GB)**

# (54) APPARATUS FOR IMPLEMENTING LOW LATENCY OPTICAL CHANNELS

(57) A low latency free-space optical data communication channel has at least one optical collimator for transmitting an optical communication signal in the form of a parallel beam across a free-space channel. The input of the collimator includes a connectorized optical fiber pigtail for connecting said collimator to a glass optical fiber carrying the signal to be transmitted across the free-space channel. The optical beam propagates in free space along the longitudinal axis of a raceway, which is at least partially enclosed. The second optical collimator located at the distant end of said raceway, is positioned to receive the free-space optical communication signal. The received signal is focused into a second optical fiber pigtail at the output side of the collimator, thereby resulting in a pigtailed free-space low latency optical channel link.

201
200
202
Optic Axis
205
210
212
206
214
215
From Server
To Switch
220
221

Fig.3



Processed by Luminess, 75001 PARIS (FR)

## Description

## CROSS-REFERENCE TO RELATED APPLICATION(S)

This application claims benefit to U.S. Provisional Patent Application No. 63/349,750, filed on June 7, 2022.

## FIELD OF THE INVENTION

The present invention generally relates to the field of high-speed optical fiber communication channels and, more specifically, to a low latency optical channel. The disclosed apparatus and method enables optical communication signals to propagate through free-space, thereby traveling at the speed of light in air minimizing propagation time. The disclosed apparatus and method provide low latency optical signal paths for a multiplicity of discrete channels equalizing the propagation delay between adjacent channels.

## BACKGROUND

Free-space optical communications (in various forms), has been used for thousands of years. The ancient Greeks used a coded alphabetic system of signals to communicate utilizing torches. In 1880, Alexander Graham Bell created the photophone, which he considered his most important invention and was the world's first wireless telephone. Bell demonstrated voice communications over free-space optics between two buildings some 213 meters apart. During the trench warfare of World War I, red filtered light signals provided undetected communications at night. Currently, free-space optical communications are widely used in commercial, military, and space applications.

Today, large data centers utilize optical fiber communications to achieve the high-speed and long channel reaches required for the switch-to-switch and switch-to-server interconnections. In the field of high-speed trading in financial markets, traders demand minimum transaction delay and guaranteed equivalent optical signal delay compared to other traders. Presently, these high-speed transactions propagate over standard single-mode and/or multimode optical fibers. To guarantee equivalent trading delays, optical fiber cable assemblies are custom manufactured where the discrete fiber lengths within said cable are precisely measured using optical time domain refractometers (OTDRs) to ensure the optical channel delays are equivalent.

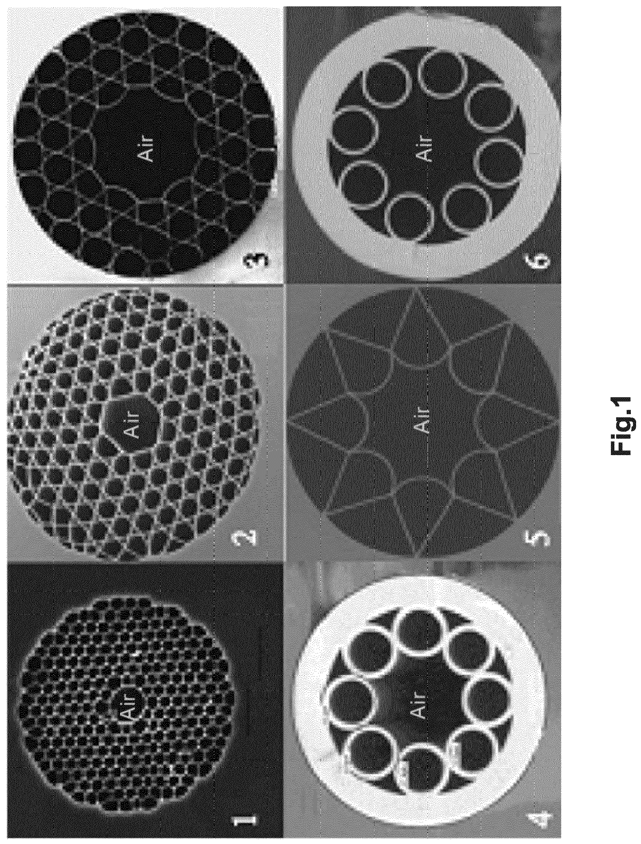

To reduce the propagation delay of the optical channel, fiber manufacturers are developing hollow core fibers, where the core is a channel of air surrounded by an array of hollow tubes which form reflective micro-structures cladding, to confine the optical beam, Fig. 1. However, these fiber types are extremely difficult to manufacture in high volume and hence, are extremely expensive, i.e., hundreds to thousands of dollars per meter. Hollow core fibers also exhibit high attenuation (insertion loss) due to the coupling of the light's electromagnetic fields with the surrounding fiber core structure. In addition, due to the highly controlled spacing between fiber core elements, these fiber types are very fragile and susceptible of degradation in performance because of bending. Consequently, hollow core fibers must have a robust cable design, and have a large bend radius not to deform or damage the core structure.

Hence, there is a need for a low-cost solution where, the optical signal propagates near that of the speed of light in vacuum so that channels of said communication signals undergo minimum delay, and traders can be guaranteed equivalent optical channel paths.

The speed of an optical signal is determined by the refractive index of the medium in which it propagates, where the refractive index is effectively the optical dielectric constant of the medium. The refractive index, n, is defined by,

$$n = \frac{c}{v} \qquad [1]$$

where, c is the speed of light in vacuum (299,792,458 m/s), and v is the speed of the optical signal in the medium. In general, the refractive index of glass, as used in optical fibers is about 1.467. Hence, the speed of light in optical fiber is 204,357,504 m/s, or 68% of the maximum speed of light in vacuum. Given a typical channel length of 75 m, the time of flight in vacuum is 250 ns. For light propagating through glass optical fiber, the time of flight for a 75 m channel is 367 ns, introducing a delay of 117 ns, or 0.117 $\mu$s. For high-speed trading, this is not acceptable.

The authors of this disclosure measured the refractive index, and hence the optical signal delay in a commercially available hollow core fiber (hcf). The refractive index was found to be $n_{hcf}$=1 .000476, yielding a 0.0476% delay compared to vacuum.

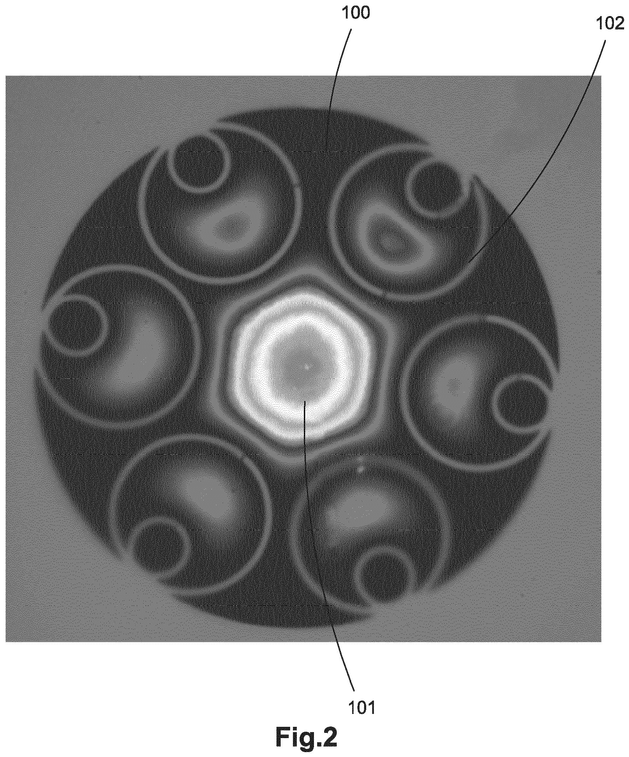

In Fig. 2, we show an image of an exposed endface of said tested hollow core fiber **100**, where the optical signal propagates as a fundamental mode within the central hollow core region, **101** (air), and the six features **102** which serve to optimize the optical performance of the hollow core fiber.

In the present invention, we disclose apparatus and method for free space optical communication channels to be used in high-speed trading applications, where the channels do not have to utilize expensive hollow core fibers.

## SUMMARY

A low latency free-space optical data communication channel has at least one optical collimator for transmitting an optical communication signal in the form of a parallel beam across a free-space channel. The input of the collimator includes a connectorized optical fiber pigtail for connecting said collimator to a glass optical fiber carrying the signal to be transmitted across the free-space channel. The optical beam propagates in free space along the longitudinal axis of a raceway, which is at least partially enclosed. The second optical collimator located at the distant end of said raceway, is positioned to receive the free-space optical communication signal. The received signal is focused into a second optical fiber pigtail at the output side of the collimator, thereby resulting in a pigtailed free-space low latency optical channel link.

## BRIEF DESCRIPTION OF THE DRAWINGS

Fig. 1 shows various cross-sections of hollow core optical fibers.
Fig. 2 shows an image of an exposed endface of said tested hollow core fiber where the optical signal propagates as a fundamental mode within the central hollow core region.
Fig. 3 we illustrate the basic optical elements of the free-space apparatus according to the present invention.
Fig. 4. shows a collimated light path enclosed within a channel raceway commonly used to carry fiber optic cables.
Fig. 5 shows a kinematic mirror cell attached to each end cap.
Fig. 6 shows a length of raceway fitted with a pair of end caps.
Fig. 7 illustrates an array of 24 optical adapters connected to 24 collimators to produce free-space channel links within said raceway.
Fig. 8 shows that the free-space communication channel can be extended by concatenating one or more free-space channel links.

## DESCRIPTION OF THE INVENTION

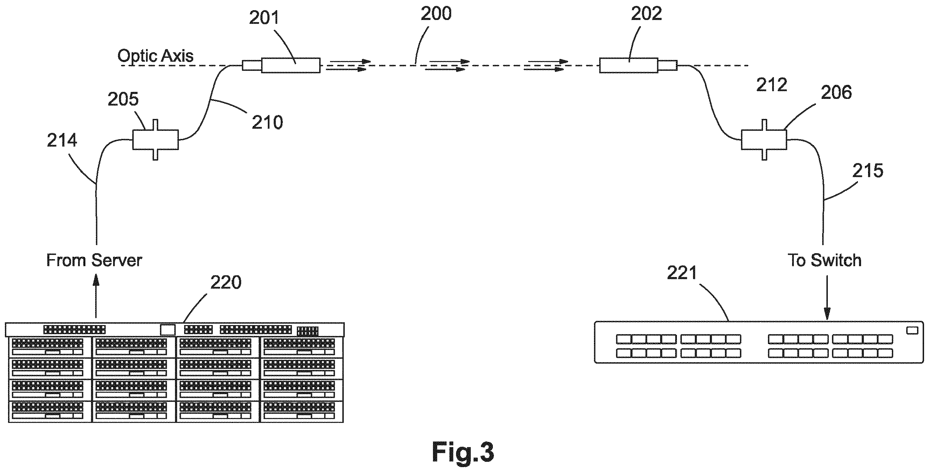

Free-space optical communications requires two necessary conditions: line-of-sight, and an unobstructed optical path, i.e., channel. In Fig. 3 we illustrate the basic optical elements of the free-space apparatus according to the present invention. The apparatus comprises an optical fiber collimator **201**, where a connectorized fiber pigtail **210** is attached (or fused) to said collimator **201** and where, the pigtailed connector is terminated in optical connector adapter **205.** Likewise, fiber pigtailed collimator **202** is terminated by means of pigtail **212** in connector adapter **206.** The two collimators are aligned to each other along a common optic axis **200.** Patch cords **214** and **215** are used to connect said free-space optical path apparatus to server **220** and switch **221** respectively (for a switch to server application).

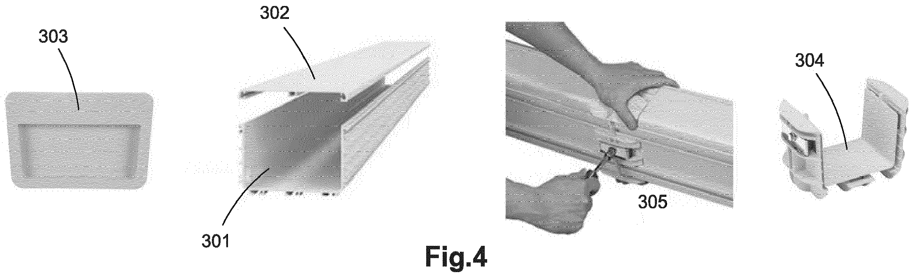

To protect and enclose the low latency free-space optical channel for communication applications according to the present invention, the collimated light path is enclosed within a channel raceway commonly used to carry fiber optic cables, Fig. 4. The use of commercial data center raceways provides all the necessary hardware, installation practices, and industry certifications for safe use. In this implementation, raceway **301** is a polymer material, enclosed with lid **302,** and two end caps **303.**

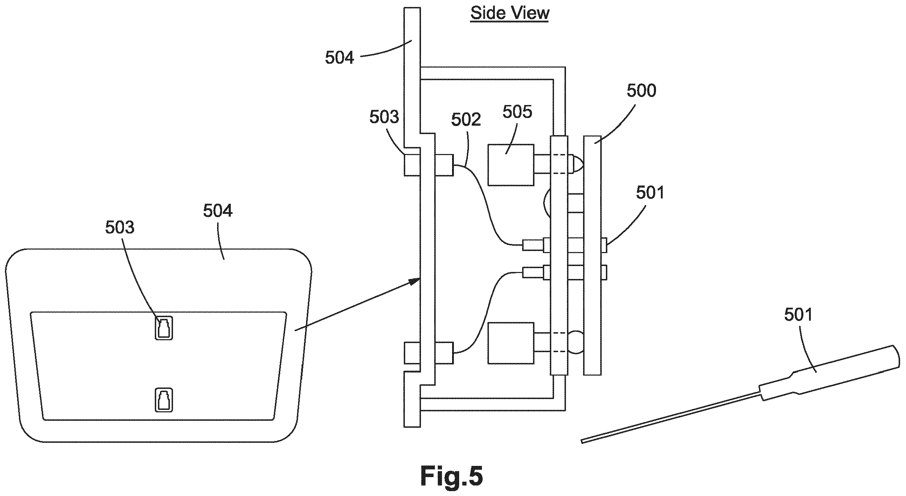

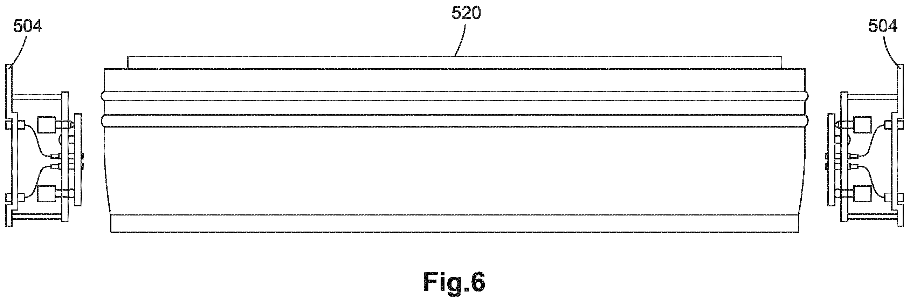

In order to optically align the transmit and receive collimators located on the opposing raceway end caps, a kinematic mirror cell (i.e., mount) **500** is attached to each end cap **504,** Fig. 5. With the addition of a sensor, controller, and power source, it is advantageous to utilize motorized linear actuators **505** to actively and automatically track collimator alignment, not shown. Hence, each free-space channel link according to the present invention comprises a length of raceway **520** fitted with a pair of end caps **504,** which supports the free-space optical and alignment elements at each end of the channel raceways **520,** Fig. 6.

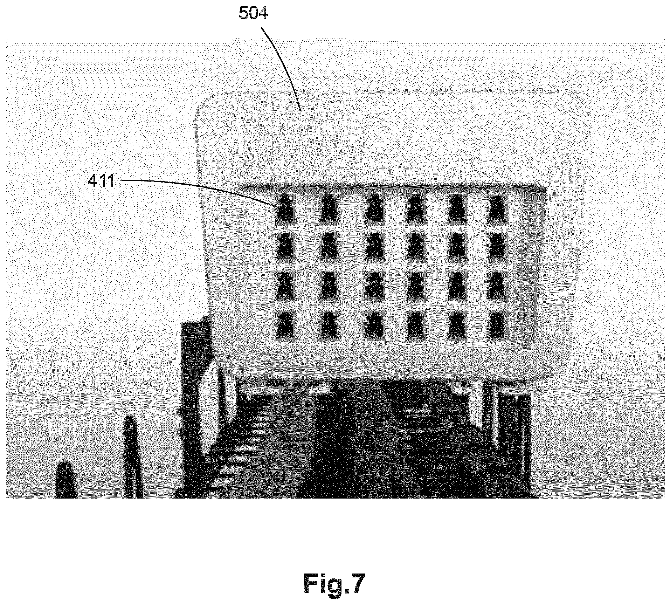

In the preferred embodiment, end cap **504** is fitted with one or more optical adapters. In Fig. 7, we illustrate an array of 24 optical adapters **411** connected to 24 collimators to produce free-space channel links within said raceway.

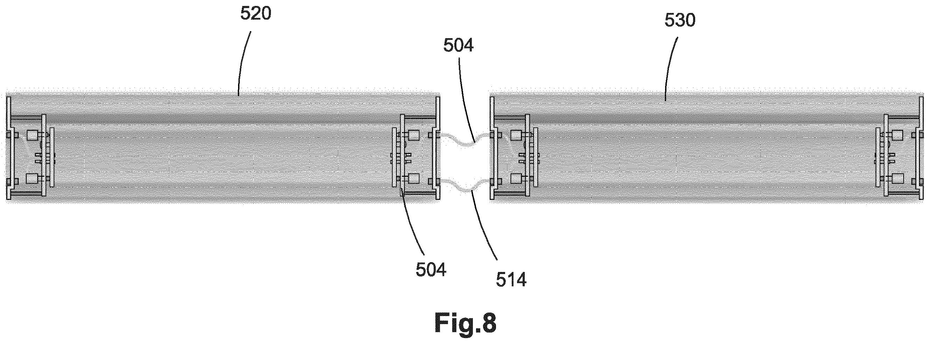

The free-space light path can be extended by adding one or more raceway subsections using a raceway coupler **304,** as shown in Fig. 4, **305.** Alternatively, the free-space communication channel can be extended by concatenating one or more free-space channel links, in this example, patch cords **504** and **514** are used to connect the collimators located on each of the raceway end caps located in **520** and **530,** as illustrated in the cross-section view shown in Fig. 8.

The concatenation of two free-space communication raceway channel links, will allow a change in physical direction if required, however, a change in direction will not be the shortest optical path between two points e.g., switch and server, and consequently, the low latency objective will be violated. It is important to note that since hollow core fiber cables are flexible, and require slack when installed, the optical path length will be longer than the free-space channel of the present invention. The disclosed method enables a true point-to-point, line-of-sight optical channel providing the shortest channel delay for light propagating through air. The speed of light in air is 299,702,547 m/s, 89,911 m/s slower than vacuum, and has a refractive index of 1.000300. Comparing the disclosed method to hollow core fiber where, $n_{hqf}$ = 1.000476, we get a 0.02% reduction in delay.

Hollow core fibers are designed for single-mode laser transmitters, typically utilizing distributed feedback lasers (DFB). DFB lasers are significantly more expensive than their multimode vertical cavity surface emitting laser (VCSEL) counterpart. It is therefore, advantageous to use multimode collimators for low cost VCSEL based transceivers as described in this disclosed invention.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention.

## Claims

**1.** A low latency free-space optical data communication channel comprising:

at least one optical collimator for transmitting an optical communication signal in the form of a parallel beam across a free-space channel, wherein the input of the collimator includes a connectorized optical fiber pigtail for connecting said collimator to a glass optical fiber carrying the optical communication signal across the free-space channel, and further wherein the parallel beam propagates in free-space along a longitudinal axis of a raceway, which is at least partially enclosed; and

a second optical collimator located at the distant end of the raceway and positioned to receive the optical communication signal, wherein the optical communication signal is focused into a second optical fiber pigtail at an output side of the collimator, resulting in a pigtailed free-space low latency optical channel link.

**2.** The free-space optical data communication channel of claim 1, further comprising end caps on opposite ends of the raceway and wherein end caps include kinematic mirror mounts to position and align the optical collimators.

**3.** The free-space optical data communication channel of claim 2, wherein linear positioners on the kinematic mirror mounts are controlled by a sensor and motor control for active alignment.

**4.** The free-space optical data communication channel of any preceding claim, wherein the raceway is assembled on a ladder rack or wire grid.

**5.** The free-space optical data communication channel of any preceding claim, wherein the apparatus includes a multiplicity of discrete free-space optical data communications signal paths in order to equalize delays of discrete optical signals.

**6.** The free-space optical data communication channel of any preceding claim, wherein the first and second optical collimators are dual fiber collimators, multi-fiber collimators, or multicore fiber collimators where input fibers are multicore fibers.

**7.** A low latency free-space optical data communication channel comprising:

at least one optical diffractive or reflecting element for producing parallel beams that propagate across a free-space channel, wherein an input of the diffractive or reflecting elements include one or more connectorized optical fiber pigtails for connecting to an optical fiber carrying a signal to be transmitted across the free-space channel, and further wherein the parallel beam propagates in free-space along a longitudinal axis of a raceway, which is at least partially enclosed; and

a second optical diffractive or reflecting element located at a distal end of said raceway positioned to receive the parallel beam, wherein the parallel beam is focused into a receiving set of optical fiber pigtails at an output side of the diffractive or reflecting element, resulting in a pigtailed free-space low latency, and low dispersion optical channel link.

**8.** The free-space optical data communication channel of claim 7, wherein end caps of the raceway include active alignment for the diffractive or reflective elements.

**9.** The free-space optical data communication channel of any of claims 7 to 8, wherein two or more wavelengths co-propagate in a same optical path.

**10.** The free-space optical data communication channel of any of claims 7 to 9, wherein two or more wavelengths counter-propagate in a same optical path.

1
Air
2
Air
3
Air
4
Air
5
Air
6
Air

Fig.1

100
102
101

Fig.2

Optic Axis
201
210
205
214
From Server
220
200
202
212
206
215
To Switch
221

Fig.3

304
305
302
301
303

Fig.4

501
500
501
Side View
505
502
503
504
504
503

Fig.5

504
520
504

Fig.6

504
411

Fig.7

530
514
504
504
520

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63349750